Europäisches Patentamt

**European Patent Office**

**Office européen des brevets**

(19)

(11) Veröffentlichungsnummer: **0 023 058**

**A1**

(12) **EUROPÄISCHE PATENTANMELDUNG**

(21) Anmeldenummer: **80200646.0**

(22) Anmeldetag: **04.07.80**

(51) Int. Cl.³: **H 05 B 7/00**

(30) Priorität: **19.07.79 FR 7918726**

(43) Veröffentlichungstag der Anmeldung:
**28.01.81 Patentblatt 81/4**

(84) Benannte Vertragsstaaten:
**AT CH DE GB IT LI SE**

(71) Anmelder: **BBC Brown, Boveri & Cie.
(Aktiengesellschaft)**

**CH-5401 Baden(CH)**

(72) Erfinder: **Gaydon, Jean-Pierre
42, avenue de l'Europe
F-78160 Marly-Le-Roi(FR)**

(72) Erfinder: **Haglon, Claude
36, bd. de la République
F-92250 La Garenne Colombes(FR)**

(54) **Verfahren und Einrichtung zur Regulierung eines Elektrolichtbogenofens.**

(57) Bei einer Einrichtung zum Regeln des Lichtbogens eines Elektrolichtbogenofens, der mindestens eine bewegliche Elektrode (3) aufweist, ist ein erstes Regelsystem (5 - 13) vorgesehen, mit welchem die Position der Elektrode eingestellt wird in Funktion mindestens einer ersten elektrischen Lichtbogencharakteristik, z.B. Widerstand, Spannung, Strom, Leistung. Die Regeleinrichtung umfasst ein zweites, vom ersten System unabhängiges Regelsystem (14 - 27) zur Aenderung der Speisespannung der Elektroden in Abhängigkeit von einer zweiten Lichtbogencharakteristik. Das vergleichsweise träge erste Regelsystem wird somit durch ein wesentlich rascher wirkendes erweitert, wodurch ein gleichmässigeres Einbringen von Wirkleistung in den Ofen sowie eine Reduktion der Netzrückwirkungen erzielt wird. Die vorgeschlagene Lösung ist insbesondere für Gleichstrom-Lichtbogenöfen vorteilhaft, wo bereits steuerbare Halbleiterelemente im Zuge der Elektrodenspeisung vorhanden sind.

FIG.1

EP 0 023 058 A1

0023058

448/79
27.6.80
He/eh

- 1 -

# Verfahren und Einrichtung zur Regulierung eines Elektrolichtbogenofens

Die vorliegende Erfindung betrifft ein Verfahren und eine Einrichtung zur Regulierung des Lichtbogens von elektrischen Lichtbogenöfen.

Man weiss, dass die optimale Steuerung der Schmelz- und Frischverfahren in Lichtbogenöfen ein genaues und Schnelles Steuern des Lichtbogens erfordert. In der Tat ist eine gute Lichtbogenstabilität ein wichtiger Faktor für eine gute Ausnützung der installierten Leistung, für eine Begrenzung der Störungen des Versorgungsnetzes sowie für eine Verringerung der Elektrodenabnützung. In der Schmelzphase muss der Lichtbogen mit gutem Wirkungsgrad bei voller Leistung angespeist werden, und nach einer Löschung oder einem Kurzschluss - bedingt durch sehr schnelles Verstellen - muss der Lichtbogen wieder äusserst schnell aufgebaut werden.

In der Frischphase muss vermieden werden, dass die Elektrode in das Bad eindringt und somit kein Aufkohlen stattfindet; eine genaue Regulierung ist somit erforderlich. Schliesslich steht man während Uebergangsperioden, d.h. bei gemischter Fest-Flüssigphase gleichzeitig den genannten Beanspruchungen gegenüber. Bis anhin bestand die Lichtbogenregulierung in der Regelung der Lichtbogenimpedanz oder eventuell seiner Leistung (aus Spannung und Stromstärke gemessen) mit Hilfe der Verstellung der Elektrode oder jeder der Elektroden, was grosse Variationen der Regelparameter erlaubt.

Ein hauptsächlicher Nachteil der bisherigen Einrichtungen, welche dieses Verfahren gebrauchen, ist darin zu sehen, dass eine kombinierte pneumatische, hydraulische, mechanische oder elektrische Apparatur mit nicht vernachlässigbaren Zeitkonstanten und Spielen im Einsatz ist. Unter diesen Bedingungen muss für die Lichtbogenregelung ein Kompromiss eingegangen werden zwischen Schnelligkeit und Genauigkeit, sowohl während des Schmelzens als auch während des Frischens. Ueberdies verbessert man die Stabilität des Lichtbogens, indem man starke Leitungsimpedanzen zulässt, welche infolge der resultierenden zusätzlichen Leitungsverluste den Leistungsfaktor und infolgedessen den Wirkungsgrad der Anlage verschlechtern.

Die Lichtbogenposition variiert hauptsächlich in Funktion:

- der Anordnung des Schmelzgutes vor oder während des Schmelzens

- des Flüssigkeitsspiegels des Metalles nach dem Schmelzen;

- der Elektrodenabnutzung.

Eine Höhenverstellung der Elektroden mit weitem Regelbereich ist somit immer unentbehrlich.

Ein Merkmal der vorliegenden Erfidnung ist die Assoziation einer Regulierung der Elektrodenverstellung mit einer Regulierung, die zur Gewährleistung der Genauigkeit und der Schnelligkeit unmittelbar auf die Lichtbogenanspeisung wirkt, demzufolge ausschliesslich auf elektrische Grössen, wodurch leicht den verschiedenen Belastungen genügt wird. Die Steuergrösse ist die Lichtbogenspannung. Sie wird verändert mit Hilfe von Steuermitteln oder von Umformern mit Thyristoren, welche in der Anspeisung auf der Primär- oder Sekundärseite des Transformators angeordnet sind.

Ein zusätzlicher Vorteil des Verfahrens ist die Möglichkeit, den Thyristorumformern neben ihrer normalen Regelfunktion auch die Funktion von statischen Schnellunterbrechern zuzuordnen, was beispielsweise zu benutzen ist bei Kurzschlüssen oder aus Sicherheitsgründen. Ein weiterer wichtiger Vorteil ist, dass das Verfahren eine Verringerung der Leitungsimpedanzen erlaubt. Im Fall eines Ofens, der mit Wechselspannung industrieller Frequenz (50 oder 60 Hz. bspw.) versorgt wird, ist der Thyristorumformer vorzugsweise antiparallel montiert, d.h. in der Weise, dass eine Wirkspannung festen Wertes umgeformt wird in eine Wirkspannung mit ununterbrochen variablem Wert. Er ist an der Primär- oder an der Sekundär-Wicklung des Netztransformators angeordnet. Das am meisten angewandte Verfahren zur Spannungsveränderung ist das Beschneiden der Spannungswellen, indem nach der natürlichen Zündung das Leiten verzögert wird, d.h., in dem der Wert des Zündverzug-Winkels des Thyristors geregelt wird. Dieses Verfahren entspricht jenem, wie es seit langem zur Heizregelung der Widerstandöfen angewendet wird. Die Versorgung der Lichtbogenöfen mit Gleichstrom ist eine relativ neue Anwendungstechnik mit grossen Vorteilen und mit der die vorliegende Erfindung einfach zu vereinen ist; sie ist von optimalem Interesse.

Zwei Ausführungsarten können in Betracht gezogen werden. In einer ersten wird die Spannung in einem an der Sekundär-wicklung des Transformators angeordneten Diodengleichrichter gleichgerichtet, während sie durch verzögerte Leitung der an der Primärwicklung angeordneten Thyristoren ihren Wert ändert. In der zweiten Art ist der Thyristorumformer an der Sekundärwicklung des Transformators angeordnet und veranlasst gleichzeitig die Spannungsgleichrichtung und deren Veränderung durch verzögerte Leitung.

Ein wichtiges und originelles Merkmal des erfindungsgemässen Verfahrens resultiert in der Kombination

- einer direkten Schnellregelung des Lichtbogens durch die Anspeisung;

- einer indirekten Regelung durch die Elektrodenverstellung, welche im Dauerbetrieb langsam vor sich geht.

Dies erlaubt im wesentlichen die Paarung einer leistungsfähigen Lichtbogenregulierung - welche eine grosse Stabilität und infolgedessen einen guten Wirkungsgrad und Energieeinsparungen gewährleistet und welche Störungen im Versorgungsnetz verringert - mit einer Elektrodenverstellung, welche im Normalbetrieb wesentlich weniger beansprucht wird und somit die Standsicherheit der Trägerkonstruktion für die beweglichen Elektroden erhöht. Die Regelung mittels Speisespannung kann mehrere Regelprinzipien umfassen, von denen die interessantesten die Regelung der Bogenimpedanz oder die Leistungsregelung sind, wobei beide Regelarten in ein und derselben Einrichtung vereinigt werden können. Die Elektrodenverstellung benutzt das gleiche Regelprinzip im Dauerbetrieb, jedoch mit geringerem Gewinn - sogar eine tote Zone diesseits einer gewissen Abweichung zwischen der vorgeschriebenen und der gemessenen Grösse - und mit wesentlich geringerem dynamischen Ansprechen. Zur Vereinfachung kann sie auf eine Spannungsregulierung reduziert werden.

Im Fall einer Senkbewegung des Schmelzgutes kann selbstverständlich einer sehr schnellen Verstellung der Elektroden angeordnet werden.

Weitere Merkmale und Vorteile der Erfindung ergeben sich
aus der folgenden Beschreibung, die sich auf die beiliegenden Zeichnungen bezieht.

Es zeigen:

Fig. 1   schematisch eine erfindungsgemässe Einrichtung, bei
         der eine Elektrodenverstellregulierung mit einer
         Regulierung für die Speisespannung assoziiert ist;

Fig. 2   schematisch ein Anwendungsbeispiel der Erfindung an
         einem mit Drehstrom versorgten Lichtbogenofen;

Fig. 3   ein weiteres Anwendungsbeispiel der Erfindung an
         einem mit Drehstrom versorgten Lichtbogenofen;

Fig. 4   eine schematische Darstellung eines Anwendungsbeispieles der Erfindung an einem Gleichstromofen mit
         einer Elektrode;

Fig. 5   ein weiteres Anwendungsbeispiel der Erfindung an
         einem Gleichstromofen mit einer Elektrode.

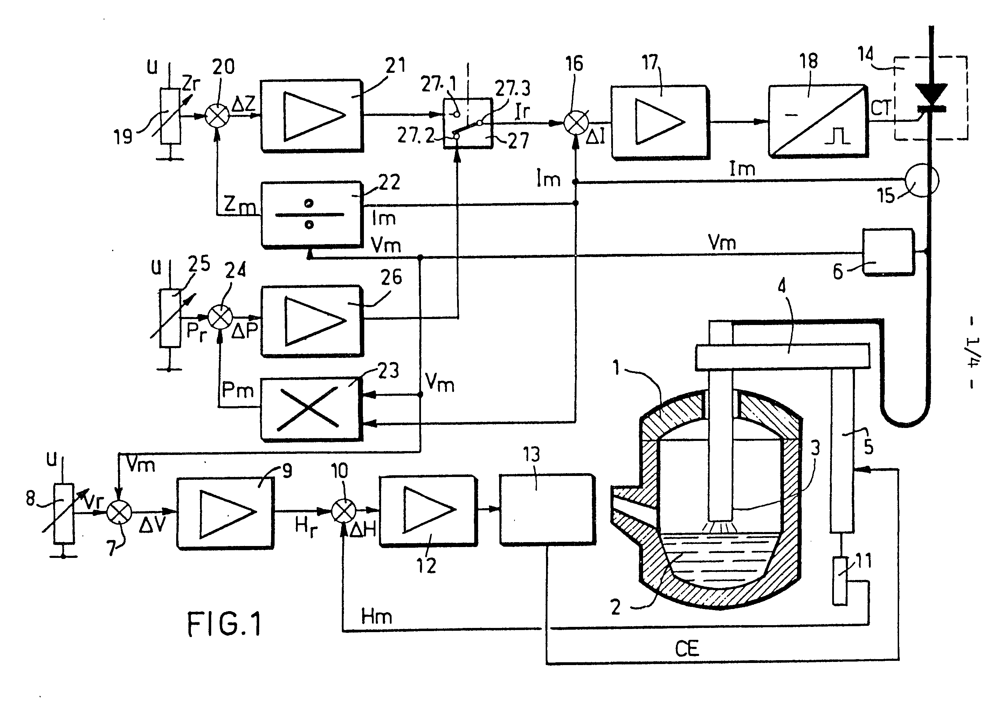

Fig. 1 zeigt schematisch eine Einrichtung zur Durchführung
des erfindungsgemässen Verfahrens, bei welchem eine Elektrodenverstellregulierung mit einer Regulierung der Lichtbogenversorgung assoziiert ist. In der Figur ist ein Ofen
1 mit nur einer Elektrode 3 dargestellt. Aber es versteht
sich, dass die gleiche Regelung an einem Ofen mit mehreren
Elektroden angewendet werden kann. Desgleichen wurde die
Anspeisung der Elektrode stark schematisiert, da die mit
Bezug auf Fig. 1 beschriebenen Ausführungsprinzipien so-

wohl bei einem mit Wechselstrom als auch bei einem mit Gleichstrom versorgten Ofen anwendbar sind.

Wie in der Figur dargestellt, besteht eine erste Regelung darin, die Position der Elektrode 3 im Ofen 1, in dem sich ein metallisches Schmelzbad 2 befindet, zu regeln. Hierfür ist die Elektrode 3 auf bekannte Art an einem beweglichen Ausleger 4 angeordnet, welcher mit einem Positionierorgan 5 verfahren werden kann; das Organ 5 kann entweder aus mechanischen, elektrischen, hydraulischen Mitteln oder aus einer Kombination dieser Mittel bestehen.

Ein für die Lichtbogenspannung $V_m$ repräsentatives Signal wird auf bekannte Art von einem Geber 6 erhalten, welcher an einem bestimmten Punkt mit der Speiseleitung für die Elektrode 3 verbunden ist. Um ein Signal zu erhalten, welches ein genaues Abbild der Lichtbogenspannung selbst ist, kann der Spannungsabfall zwischen Messpunkt und Lichtbogen berücksichtigt werden.

Das Signal $V_m$ wird an einen ersten Eingang einer Mischerstufe 7 angelegt, deren zweiter Eingang ein Referenz-Spannungssignal $V_r$ erhält, welches von irgendeiner geeigneten Vorrichtung, bspw. von einem Potentiometer 8 geliefert wird, der seinerseits zwischen Erde und einer Gleichstrom-Speisespannung angeordnet ist. Es versteht sich, dass der Wert von $V_r$ in Abhängigkeit der Betriebsbedingungen zu wählen ist und dass er sowohl vom Betriebspersonal als auch von einem das Verfahren steuernden Automaten eingegeben werden kann.

Die Mischerstufe 7 erzeugt ein die Abweichung zwischen gemessener Lichtbogenspannung $V_m$ und Referenzspannung $V_r$ darstellendes Signal $\Delta V$. Dieses Signal $\Delta V$ wird an einen Regler 9 angelegt, welcher aus einem mit 2 geeigneten Korrekturglieder versehenen Verstärker besteht und der das Signal zur Erzeugung eines Positions-Referenzsignals Hr hin verstärkt. Letzteres wird an einen ersten Eingang einer Mischerstufe 10 angelegt, deren anderer Eingang ein für die Stellung der Elektrode 3 repräsentatives Messsignal Hm erhält, welches von einem an sich bekannten Positionsmessfühler 11 stammt.

Das die Stellungsabweichung darstellende Signal $\Delta$ H am Ausgang der Mischerstufe 10 wird an einen Stellungsregler 12 angelegt, deren Ausgang mit einem Leistungsverstärker 13 verbunden ist. An dessen Ausgang liegt somit ein Steuersignal CE für das Positionierorgan 5 an. Mit dieser ersten Regelschleife kann somit die Elektrode 3 des Lichtbogenofens eingestellt werden, wozu die gemessene Lichtbogenspannung, die Elektrodenstellung und eine Referenzspannung berücksichtigt werden.

Gemäss vorliegender Erfindung ist diese Regelung für die Elektrodenverstellung mit einer unmittelbaren Regelung der Speisespannung gekoppelt. Hierfür wird eine in Fig. 1 stark schematisierte Thyristorgruppierung 14 benutzt. Die genaue Zusammensetzung dieser Gruppierung ist von mehreren Faktoren abhängig, insbesondere vom Ofentyp, von der Elektrodenanzahl, von der Anspeisung sowie von anderen Kriterien wie bspw. den Anlagekosten. Verschiedene Ausführungsbeispiele sind nachstehend mit Bezug auf die anderen beiliegenden Figuren beschrieben.

Wie in Fig. 1 dargestellt, werden die Anschlüsse der Thyristoren durch Signale CT so gesteuert, dass die an die Elektrode angelegte Spannung variiert. Im in Fig. 1 dargestellten Ausführungsbeispiel ist eine primäre Regelung, bestehend aus einer Impedanz- oder einer Leistungsregelung mit einer sekundären, aus einer Stromregelung bestehenden Regelung assoziiert. Diese zweite Regelschleife, welche eine Strombegrenzung erlaubt, ist ein Stabilitätsfaktor für die Steuerung. Im übrigen ist es auch möglich, bei bestimmten Betriebsbedingungen eine einfache Stromregulierung zu verwenden.

Wie gezeigt, misst ein auf jede geeignete Art in der Speiseleitung angeordneter Aufnehmer 15 die echte Lichtbogen-Stromstärke Im.

Dieses Stromstärkesignal Im wird an einen ersten Eingang einer Mischerstufe 16 angelegt, deren anderer Eingang ein Referenzsignal des Lichtbogenstromes Ir erhält. Dieses Rererenzsignal entstammt vorzugsweise einem nachstehend beschriebenen Primärregler. Die Abweichung $\triangle$ I zwischen Messstrom Im und Referenzstrom Ir wird in einem Stromregler 17 verstärkt, dessen Ausgang mit einem Steuerkreis 18 verbunden ist. Dieser Kreis 18 verarbeitet Impulse, welche in Funktion des Wertes des am Eingang anliegenden Dauersignals verzögert werden, so dass jeder Thyristor der Gruppierung 14 Steuerimpulse CT erhält, welche den Zündzeitpunkt des Thyristors während seiner Leitperiode bestimmt. Die Primärregulierung kann eine Impedanz- oder eine Leistungsregulierung sein.

Im ersten Fall wird ein Referenzsignal Zr der Lichtbogenimpedanz, welches bspw. von einem zwischen Speisespannung U und Masse angeordnetem Potentiometer 19 geliefert wird, in einer Mischerstufe 20 mit der gemessenen Impedanz Zm verglichen. Die Abweichung $\triangle$ Z zwischen Messwert und Referenzwert der Impedanzsignale wird in einem Regler 21 verstärkt, an dessen Ausgang ein als Referenzsignal für den Lichtbogenstrom Ir dienendes Signal anliegt. Das für die gemessene Impedanz repräsentative Signal Zm wird von einem Schaltkreis 22 geliefert, welcher auf bekannte Weise das Verhältnis zwischen gemessener Spannung Vm und gemessener Stromstärke Im
bildet.

Für den Fall, dass eine Leistungsregulierung des Lichtbogens erwünscht ist, wird ein Signal Pm der gemessenen Leistung in einem Schaltkreis 23 erzeugt, indem das Produkt zwischen gemessener Lichtbogenspannung Vm und gemessener Lichtbogenstromstärke Im gebildet wird. Dieses Signal Pm wird an einen Eingang einer Mischerstufe 24 angelegt, deren anderer Eingang ein Referenzsignal Pr der Leistung erhält. Dieses Referenzsignal kann bspw. von einem zwischen Masse und Speisespannung U angebrachtem Potentiometer 25 geliefert werden. Das in der Mischerstufe 24 erzeugte Leistungsdifferenzsignal $\Delta P$ wird im Regler 26 verstärkt. Die Ausgänge der Regler 21 und 26 sind mit Eingangsklemmen 27.1 resp. 27.2 eines Schalters 27 verbunden, dessen Ausgangsklemme 27.3 mit der Mischerstufe 16 zwecks Uebertragung des Strom-Referenzsignals Ir verbunden ist.

Abhängig von der Schalterstellung 27 benutzt die Einrichtung eine Impedanz- oder eine Leistungsregelung. Die Wahl zwischen beiden Regulierungsarten geschieht in Funktion der Betriebsbedingungen.

Die Betätigung des Schalters 27 kann automatisch sein. In diesem Fall kann er durch einen Verfahrenssteuerautomaten oder durch Schwellwertdetektoren gesteuert werden, mit der Möglichkeit, gleichzeitig Impedanz und Leistung innerhalb vorbestimmter Bereiche zu halten. Die mit Blick auf Fig. 1 schematisch beschriebene Einrichtung hat hauptsächlich zum Zweck, eines der wesentlichen Merkmale der Erfindung zu illustrieren, d.h. die Assoziation einer Elektrodenverstellregulierung und einer Speiseregulierung. Es versteht sich, dass die verschiedenen Regulierungen in ihrer Ausführung vielfach variieren können.

Wenn der Ofen mehrere Elektroden aufweist, wird vorteilhafterweise für jede Elektrode eine Regeleinrichtung verwendet, wie sie in Hinblick auf Fig. 1 beschrieben wurde.

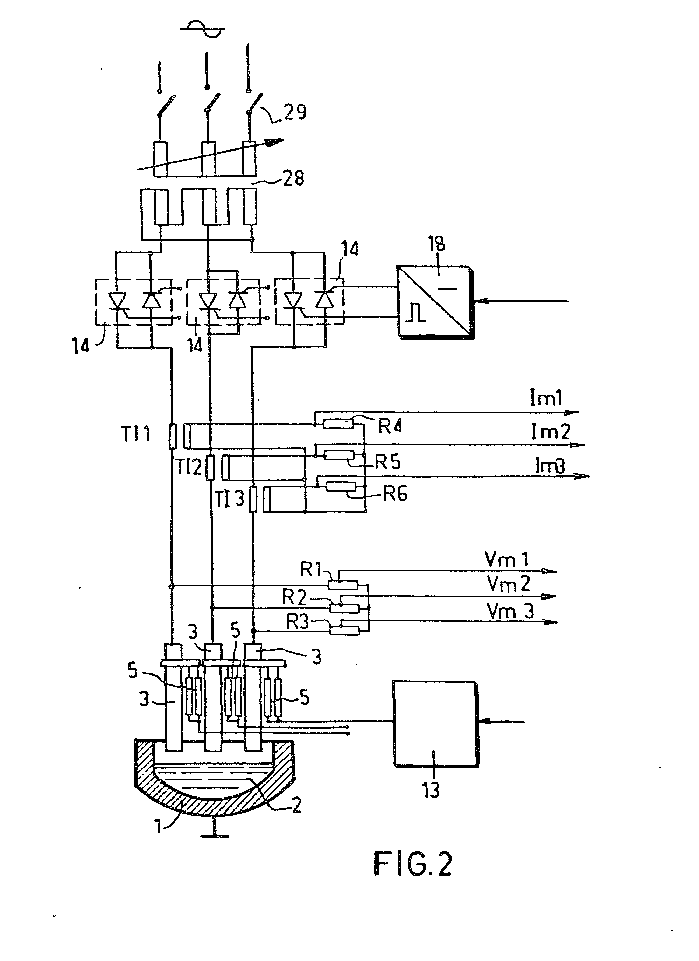

Die Fig. 2 bis 5 sind schematische Darstellungen von Beispielen, die allein zu dem Zweck beschrieben sind, um die Anwendungsmöglichkeit des erfindungsgemässen Verfahrens zu illustrieren, wobei zu wohl bekannten Mitteln gegriffen wird, die laufend für andere Anwendungen benutzt werden, bspw. in Verbindung mit Widerstandsöfen oder Motoren mit variabler Geschwindigkeit.

Fig. 2 zeigt ein Ausführungsbeispiel der Erfindung in Anwendung bei einem Ofen mit drei Elektroden 3 und dreiphasiger Anspeisung. Die Einstellung jeder Elektrode geschieht durch ein Organ 5, welches durch einen Leistungsverstärker 13 gesteuert ist, von dem nur einer dargestellt ist. Der Ofen wird über einen mit einem Abschalter 29 geschützten Transformator 28 versorgt. Im gezeigten Beispiel ist dieser Transformator auf der Primärseite mit einem zwecks Spannungsänderung in Abhängigkeit der Betriebsbedingungen dienenden Stufenschalter versehen.

Es ist klar, dass die Präsenz von Thyristorgruppierungen 14, welche für die erfindungsgemässe Spannungsregelung vorgesehen sind, in gewissen Fällen den Fortfall des Stufenschalters erlauben kann. In der gezeigten Ausführung ist eine Thyristorgruppierung 14 in jeder Phase angeordnet und zwar zwischen der Sekundärwicklung des Einzeltransformators 28 und den Elektroden 3. Jede Gruppierung 14 enthält 2 Thyristoren, die antiparallel montiert sind, d.h. in Kopf-bei-Fuss Anordnung (parallel und gegenphasig). Jede Gruppierung wird durch einen Steuerkreis 18 gesteuert, von denen nur einer dargestellt ist. Jeder Thyristor eines Paares erhält vom Schaltkreis 18 geeignete Steuerimpulse, der eine während der positiven Spannungshalbperiode, der andere während der negativen Spannungshalbperiode.

Gemäss Fig. 2 liefern die Aufnehmer 15 dem Regelkreis die Stromwerte Im1, Im2 und Im3 der einzelnen Elektroden. Die Aufnehmer bestehen jeweils aus in jeder Phase des Speisenetzes angeordneten Stromwandlern TI1, TI2 und TI3 mit ihren respektiven Belastungswiderständen R4, R5 und R6. Ebenfalls dargestellt sind in Form von Widerständen R1, R2 und R3 die Aufnehmer 6 zur Erzeugung der Spannungen Vm1, Vm2 und Vm3 in jeder Phase. Nicht in der Figur dargestellt sind jene Regelschleifen, welche identisch mit den in Fig. 1 gezeigten sind.

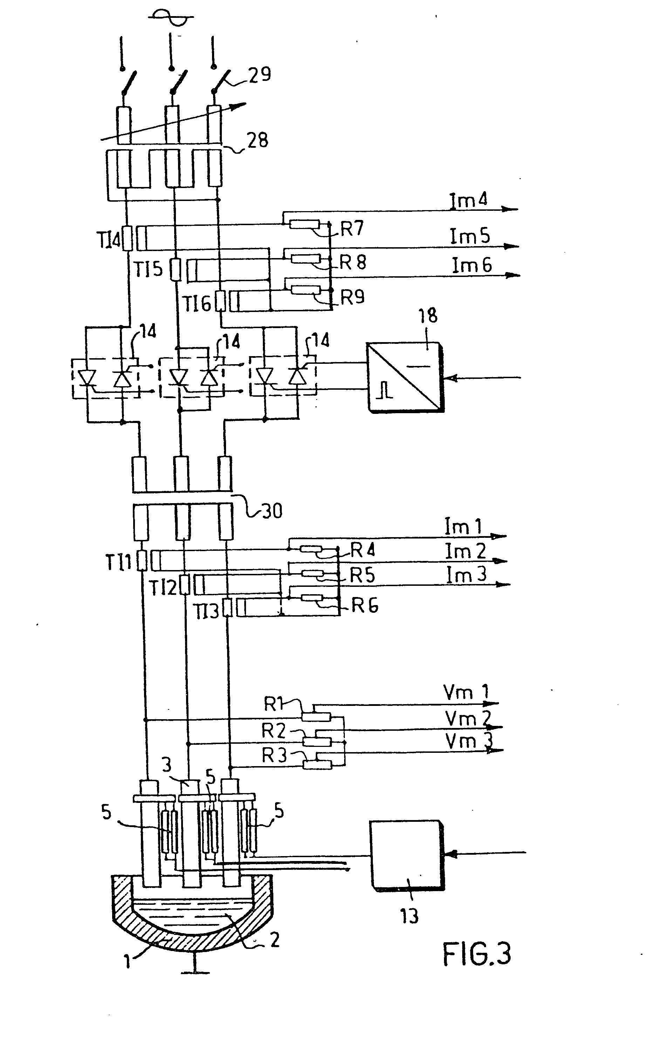

Wie Fig. 2 zeigt Fig. 3 ein Ausführungsbeispiel der Erfindung an einem gleichstromgespeisten Lichtbogenofen mit 3 Elektroden. Bei dieser Ausführungsart versucht man die Anwendung der Thyristoren optimaler zu gestalten, in dem man sie in bestens angepassten Spannungsbereichen betreibt. So kommt insbesondere bei relativ niedriger Lichtbogenspannung ein zwischen Thyristorgruppierung 14 und Elektroden 3 angeordneter Hilfstransformator 30 zur Anwendung. Die Thyristoren sind dann an der Sekundärseite des Netztransformators 28 und an der Primärseite des zur Spannungsanpassung vorgesehenen Hilfstransformators 20 angebracht.

Die Messung des Lichtbogenstroms Im und der Lichtbogenspannung Vm wird zwischen der Sekundärseite des Hilfstransformators und den Elektroden durchgeführt.

Wie dargestellt, können die Thyristor-Gruppierungen 14 durchfliessenden Ströme Im4, Im5 und Im6 mit Hilfe von Stromwandlern TI4, TI5 und TI6 und innen zugeordneten Widerständen R7, R8 und R9 gemessen werden. In diesem Fall kann eines der Strommessorgane für die Regulierung benutzt werden, während das andere Strommessorgan für die Steuerung von (nicht gezeigten) Sicherheitseinrichtungen herangezogen werden kann.

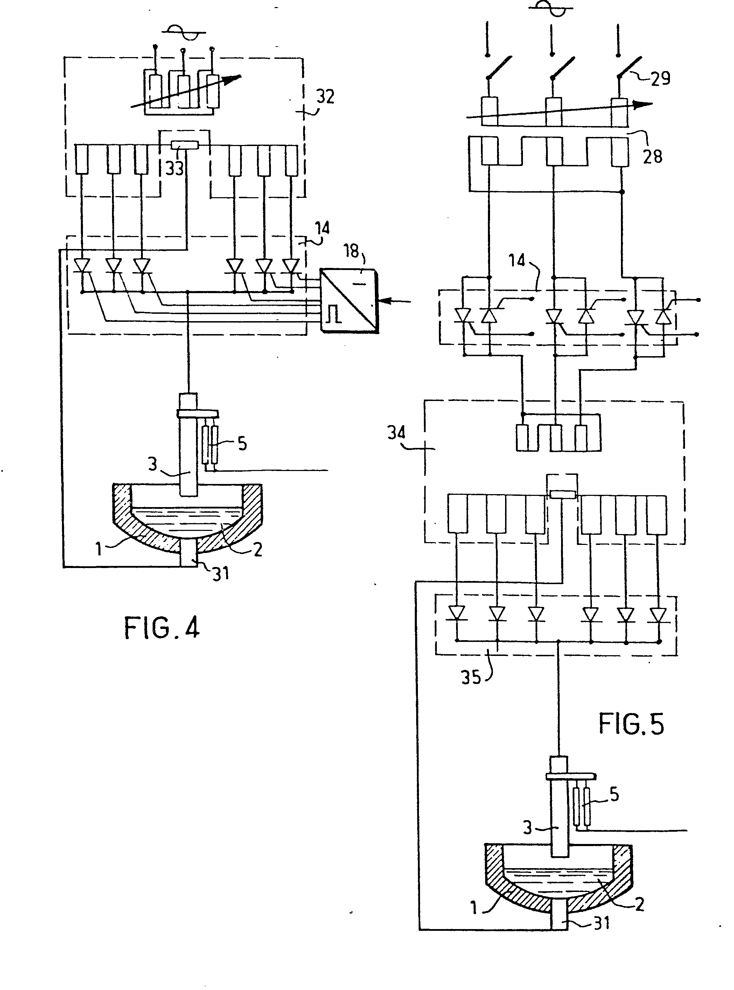

Fig. 4 ist eine schematische Darstellung einer Ausführungsart der Erfindung in ihrer Anwendung bei einem Gleichstromofen. Auf der Figur enthält der Ofen eine einzige,
durch ein Organ 5 zu verstellende Elektrode 3. Die Stromrückleitung geschieht über einen Sohlenleiter 31. Die Versorgung des Ofens vom Netz her wird mit Hilfe eines Transformators durchgeführt, welcher an seiner Primärwicklung
vorzugsweise mit einem Stufenschalter versehen ist. Die
Sekundärwicklung ist in Stern-Sternschaltung ausgeführt
mit einer Absorptionsspule 33, wie dies des öfteren bei
der Anwendung der Thyristoren in der Gleichrichtung von
schwachen Spannungen ausgeführt ist.

Eine Thyristorgruppierung 14 ist zwischen der Sekundärseite des Transformators 32 und einem gemeinsamen, mit der
Elektrode verbundenem Punkt angebracht, und die Stromrückleitung findet zwischen der Sohle und dem Mittelpunkt
der Absorptionsspule 33 statt. Wenn die Versorgung wie gezeigt ausgeführt wird, mit Hilfe einer Sekundärwicklung in
Stern-Sternschaltung, enthält die Gruppierung 14 sechs
Thyristoren, wobei jeder in Serie zwischen Elektrode und
einer Spule der Sekundärwicklung angeordnet ist. In diesem
Fall werden alle Thyristoren von einem Steuerkreis 18 gesteuert, welcher die erforderlichen Steuerimpulse in Funktion der Lichtbogenmerkmale verarbeitet, so wie dies in
Hinblick auf Fig. 1 beschrieben worden ist.

Die Elemente für die Leistungsverstärkung sowie für die
Strom- und Spannungsmessung sind analog zu jenen, wie sie
im Hinblick auf die anderen Figuren beschrieben worden
sind; aus Gründen der Uebersichtlichkeit sind sie nicht dargestellt. Es ist möglich das gleiche Prinzip bei der Regelung eines Gleichstromofens mit 3 Elektroden anzuwenden. Jede Elektrode wird dann so versorgt, wie es in Fig. 4 dargestellt ist. Bei Benutzung von Trafo-Primärwicklungen mit angemessener Phasenverschiebung und mit bspw. Zickzack-Kopplungen können die Störungen des Versorgungsnetzes beschränkt werden.

Fig. 5 zeigt ebenfalls eine Anwendung der Erfindung bei einem Gleichstromofen. So wie in der Ausführungsart gemäss Fig. 3 versucht man, die Thyristoren in geeigneten Spannungsbereichen zu betreiben. Die Gruppierung 14 besteht aus 3 Thyristor-Paaren, die in Parallelschaltung und gegenphasig an der Sekundärwicklung des Haupt-Netztransformators 28 und oberhalb eines zur Spannungsanpassung vorgesehenen Hilfs-Transformators 34 angeordnet sind. Die mit den Thyristoren regulierte Wechselspannung wird in einem an der Sekundärseite des Hilfs-Transformators angebrachten Dioden-Gleichrichter gleichgerichtet.

Selbstverständlich ist die Erfindung nur zur Erläuterung und keineswegs in einschränkender Weise beschrieben worden und alle nützlichen Abweichungen im Bereich der Aequivalente können vorgenommen werden, ohne den Rahmen der Erfindung zu verlassen, wie er in den nachstehenden Patentansprüchen definiert ist.

Im einzelnen:

- können mehrere Regulierungstypen einzeln oder assoziiert angewendet werden - Strom, Spannung, Imedanz, Leistung - sofern sie als Endregelgrössen die Elektrodenstellung einnerseits und die Lichtbogenspeisespannung andererseits benutzen;

- kann das Verfahren sowohl bei Gleichstrom- als auch bei Wechselstromöfen angewendet werden;

- kann ggfs. der Stufenschalter des Transformators fortgelassen werden, indem die Möglichkeiten zur Spannungsveränderung benutzt werden, welche Thyristor-Umformer ausfweisen;

- kann der Stufenschalter des Transformators automatisch betätigt werden, bspw. wenn der Zündverzögerungswinkel des Thyristors die vorbestommten Grenzwerte überschreiten;

- können eventuell die Thyristoren durch Triacs oder äquivalente Halbleiterelemente ersetzt werden;

- können mehrere Thyristoren in Parallel- und/oder in Serienschaltung angeordnet sein, wobei ihre Anzahl in Abhängigkeit der erforderlichen Leistung zu bestimmen ist.

Bezeichnungsliste

1 Ofen

2 Schmelzbad

3 Elektrode

4 beweglicher Ausleger

5 Positionierorgan

6 Geber

7 Mischerstufe

8 Potentiometer

9 Regler

10 Mischerstufe

11 Positionsmessführer

12 Stellungsregler

13 Leistungsverstärker

14 Thyristorgruppierung

15 in der Speiseleitung angeordneter Aufnehmer

16 Mischerstufe

17 Stromregler

18 Steuerkreis / Schaltkreis

19 Potentiometer

20 Mischerstufe

21 Regler

22 Schaltkreis

23 Schaltkreis

24 Mischerstufe

25 Potentiometer

26 Regler

27 Schalter

27.1, 27.2 Eingangsklemme

27.3 Ausgangsklemme

28 Transformator

29 Abschalter

Hm  Messsignal

Hr  Positions-Referenzsignal

Im  Lichtbogen-Stromstärke

Ir  Lichtbogenstrom

Pm  Signal

Pr  Referenzsignal

Vm  Lichtbogenspannung

Vr  Referenz-Spannungssignal

Zm  Impedanz

Zr  Referenzsignal

CE  Steuersignal

CT  Steuerimpulse

U  Speisespannung

Im1, Im2, Im3 Stromwerte

Im4, Im5, Im6 durchfliessende Ströme

R1,  R2,  R3 Widerstände

R4,  R5,  R6 Belastungswiderstände

R7,  R8,  R9 Widerstände

TI1, TI2, TI3 Stromwandler

Vm1, Vm2, Vm3 Spannungen

Patentansprüche

1. Verfahren zur Lichtbogenregulierung eines elektrischen Lichtbogenofens mit mindestens einer beweglichen Elektrode, wobei die Elektrodenstellung in Funktion von mindestens einer ersten elektrischen Kenngrösse des Lichtbogens geändert wird, dadurch gekennzeichnet, dass die Speisespannung der Elektrode in Funktion von mindestens einer zweiten Kenngrösse des Lichtbogens geändert wird.

2. Verfahren nach Anspruch 1, dadurch gekennzeichnet, dass die erste und die zweite Kenngrösse des Lichtbogens eine Auswahl aus der Gruppe Impedanz, Leistung, Stärke des die Elektrode durchfliessenden Stromes und Bogenspannung ist.

3. Verfahren nach einem der Ansprüche 1 und 2, dadurch gekennzeichnet, dass die erste elektrische Kenngrösse des Lichtbogens die Lichtbogenspannung ist.

4. Lichtbogenregeleinrichtung zur Durchführung des Verfahrens nach einem der Ansprüche 1 bis 3, in einem Lichtbogenofen, welcher über das Netz gespeist ist und mindestens eine bewegliche Elektrode aufweist, dadurch gekennzeichnet, dass zur Aenderung der Lichtbogenspannung zwischen Elektrode und Netz mindestens ein Thyristor angeordnet ist, dessen Steueranschluss mit dem Ausgang eines Regelkreises verbunden ist, an dessen Eingänge mindestens ein Messsignal und ein Referenzsignal, beide charakteristisch für eine elektrische Kenngrösse des Lichtbogens, angelegt sind.

5. Einrichtung nach Anspruch 4 für einen mit Gleichstrom gespeisten Ofen, dadurch gekennzeichnet, dass die Regelthyristoren zur Gleichrichtung des Netzstromes angeordnet sind.

6. Einrichtung nach Anspruch 4, dadurch gekennzeichnet, dass die Thyristoren paarweise, parallel und gegenphasig angeordnet sind.

7. Einrichtung nach Anspruch 6 für einen mit Gleichstrom gespeisten Ofen, dadurch gekennzeichnet, dass die Thyristoren an der Primärseite eines Hilfstransformators angeordnet sind, und dass ein Diodengleichrichter zwischen Sekundärseite des Hilfstransformators und Elektrode angeordnet ist.

8. Einrichtung nach einem der Ansprüche 4 bis 7 , dadurch gekennzeichnet, dass die Regelthyristoren überdies so gesteuert sind, dass sie als statische Unterbrecher dienen.

FIG.1

FIG.2

FIG.3

0023058

FIG.4

FIG.5

0023058

Europäisches
Patentamt

**EUROPÄISCHER RECHERCHENBERICHT**

Nummer der Anmeldung

EP 80 20 0646

| Kategorie | EINSCHLÄGIGE DOKUMENTE Kennzeichnung des Dokuments mit Angabe, soweit erforderlich, der maßgeblichen Teile | betrifft Anspruch | KLASSIFIKATION DER ANMELDUNG (Int.Cl. 3) |
|---|---|---|---|
| | US - A - 2 632 862 (G.E. STOLZ) <br> * Spalte 2, Zeile 1 - Spalte 3, Zeile 25; Spalte 4, Zeile 49 - Spalte 6, Zeile 21; Abbildung * <br><br> -- <br><br> US - A - 2 422 539 (R.A. GEISELMAN et al.) <br> * Spalte 1, Zeile 43 - Spalte 3, Zeile 15; Abbildungen 1A,1B * <br><br> -- <br><br> FR - A - 857 940 (L. GRANGETTE) <br> * Seite 4, Zeile 34 - Seite 5, Zeile 72; Abbildung 4 * <br><br> -- <br><br> DE - A - 1 565 062 (SIEMENS) <br> * Seite 4, Zeile 11 - Seite 6, Zeile 1; Abbildung 1 * <br><br> ---- | 1,2,4, 6 <br><br><br><br><br> 1 <br><br><br><br><br><br><br><br><br><br><br> 4,6-8 | H 05 B 7/00 <br><br><br><br><br><br><br><br><br> RECHERCHIERTE SACHGEBIETE (Int. Cl. 3) <br><br> G 05 F 1/08 <br> H 05 B 7/148 <br> 7/156 <br> 7/00 <br> B 23 K 9/06 |

KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenor. Den Haag | Abschlußdatum der Recherche 16-10-1980 | Prüfer RUGGIU |
|---|---|---|

EPA form 1503.1 06.78